Europäisches Patentamt

European Patent Office

Office européen des brevets

(19)

(11)  EP 1 380 742 B1

(12)  EUROPEAN PATENT SPECIFICATION

(45) Date of publication and mention
of the grant of the patent:
**12.10.2005  Bulletin 2005/41**

(51) Int Cl.⁷: **F02D 41/02**, F02D 41/40,
F02D 41/04

(21) Application number: **03015514.7**

(22) Date of filing: **09.07.2003**

(54) **Fuel injection control device, method and computer program for engine**

System, Verfahren und Computerprogramm zur Steuerung der Kraftstoffeinspritzung für einen Motor

Système, méthode et programme informatique de commande d'injection de carburant pour un moteur

(84) Designated Contracting States:
**DE**

(30) Priority: **09.07.2002  JP 2002199562**

(43) Date of publication of application:
**14.01.2004  Bulletin 2004/03**

(73) Proprietor: **Mazda Motor Corporation**
**Hiroshima 730-8670 (JP)**

(72) Inventors:
 • **Nishimura, Hiroyuki**
**Aki-gun, Hiroshima 730-8670 (JP)**
 • **Yashiki, Eriko**
**Aki-gun, Hiroshima 730-8670 (JP)**

(74) Representative: **Müller-Boré & Partner**
**Patentanwälte**
**Grafinger Strasse 2**
**81671 München (DE)**

(56) References cited:
**EP-A- 0 889 220**       **DE-A- 19 952 830**
**US-A1- 2002 078 684**

 • **PATENT ABSTRACTS OF JAPAN vol. 2000, no.
09, 13 October 2000 (2000-10-13) & JP 2000
179326 A (TOYOTA MOTOR CORP), 27 June 2000
(2000-06-27)**

**Description**

The present invention relates to a fuel injection control device, method and computer program product for engine, and in particular to, a fuel injection control device for engine that is structured so as to post-inject a fuel in order to forcibly regenerate a particulate filter. The present invention belongs to the technical field for internal combustion engine.

Exhaust particulates called particulates are generally contained in an exhaust gas from a diesel engine or the like. For this reason, a filter for removing the particulates is provided on an exhaust path. The particulate filter is formed of non-woven fabric made of ceramic fiber such as alumina typically or the like and captures exhaust particulates discharged from a combustion chamber. Because an accumulated amount of exhaust particulates is increased over time and thus the filter is clogged, means for solving this drawback must be taken. Pressure sensors are placed at the upstream side and the downstream side of the filter. Then, it is determined that the accumulated amount is equal to or larger than a predetermined amount and the filter is clogged if a differential pressure or a pressure ratio between a pressure of the upstream side of the filter and a pressure of the downstream side thereof is equal to or larger than a predetermined value. Then, the particulate filter is heated. When the filter is heated, captured exhaust particulates are burnt and removed, so that the particulate filter is forcibly regenerated. Conventionally, a filter is heated by a heat source such as a heater or the like. It is suggested as other means that a fuel is post-injected at a timing later than a main injection and unburnt component is combusted by an oxidation catalyst within an exhaust path, so that a filter is heated.

In a diesel engine, an injector directly injects a fuel into an inter-cylinder combustion chamber. By controlling valve-opening time and valve-opening timing for the injection together with a fuel pressure within a common rail, fuel injection amount and fuel injection timing can be controlled. Generally, a fuel is injected in a vicinity of a compression top dead center. Output for traveling is obtained from explosion energy from self-igniting fuel (main injection). When a fuel is injected during an expansion stroke subsequent to the main injection (post-injection), an unburnt hydrocarbon component is discharged into an exhaust path and removed in an oxidized manner, i.e., burnt on the exhaust path by an oxidation catalyst placed at the upstream side of a particulate filter. As a result, the temperature of an exhaust is increased, an exhaust gas with high temperature is flown into the particulate filter and the temperature of the particulate filter is increased. Then, exhaust particulates are removed by combustion. For example, Japanese Patent Application Laid-Open (JP-A) No. 2000-179326 discloses such a technique. In accordance with this publication, the technique that a particulate filter is regenerated by injecting a fuel during an expansion stoke is disclosed.

The entire amount of a post-injected fuel is not exhausted from a combustion chamber to an exhaust path in an exhaust stroke and a part of the fuel may remain in the combustion chamber as a residual gas or return from the exhaust path to the combustion chamber. Alternatively, a part of the post-injected fuel may adhere to the wall surface of a cylinder exposed because of a piston being descended during an expansion stroke. Such fuels are not burnt in the exhaust path nor contribute to an increase in exhaust temperature. Thus, heating of a filter is insufficient by the amounts of such fuels, so that expected forced regeneration of a particulate filter cannot be accomplished.

DE 199 52 830 A1 discloses fuel injection control device which performs a post-injection in dependence of the temperature in the proximity of a pre-catalyst and in dependence of an accumulated amount of a particulate filter.

EP 0 889 220 A2 discloses a fuel injection control device which corrects the amount of fuel injected by a post-injection in accordance with the amount of fuel adhering on the wall surface of cylinder.

It is the object of the invention to reduce engine noise and emissions of an engine which performs post-injection to regenerate a particulate filter.

This object is fulfilled by a fuel injection control device having the features disclosed in claim 1, a fuel injection control method having the features disclosed in claim 3 and a computer program product according to claim 5. Preferred embodiments are defined in the dependent claims.

Accordingly, a forced regeneration of a particulate filter is effectively performed by considering that a part of a post-injected fuel does not contribute to an increase in exhaust temperature as described above and thus nor to the forced regeneration of the particulate filter.

In order to accomplish the aforementioned object, in accordance the present invention, there is provided fuel injection control device for engine comprising: a particulate filter that is placed on an exhaust path for the engine and captures exhaust particulates; accumulated amount detection means for detecting an accumulated amount of exhaust particulates accumulated in the filter; fuel injection means for directly injecting a fuel into an inter-cylinder combustion chamber for the engine; and particulate filter forced regeneration means which, when an accumulated amount which is equal to or larger than a predetermined amount is detected by the accumulated amount detection means, controls the fuel injection means to perform post-injection for injecting a fuel during an expansion stroke subsequent to main injection for injecting the fuel in a vicinity of a compression top dead center in order to remove by combustion exhaust particulates accumulated in the filter, the fuel injection control device comprising: temperature-related value detection means for detecting value related to the temperature of the filter; speed detection means for detecting the speed of the engine; load detection means for detecting the load of the engine; first calculation means for calculating a post-injection amount required for forced regeneration of the filter on the basis of at least one detected result from the detection means; second calculation means for calculating a ratio of post-injection amount which does not contribute to the forced regeneration of the particulate filter when the post-injection is performed on the basis of at least one detected result from the detection means; and third calculation means for calculating a post-injection amount to be actually injected on the basis of the required post-injection amount calculated by the first calculation means and the ratio of the post-injection amount which does not contribute to the forced regeneration calculated by the second calculation means, wherein the forced regeneration means is structured so as to perform post-injection with the post-injection amount calculated by the third calculation means.

In accordance with the above-described structure, the first calculation means firstly calculates a post-injection amount required for forced regeneration of a particulate filter. Nevertheless, post-injection is not performed with this amount (required amount for regeneration) as it is. The second calculation means calculates a ratio of a post-injection amount which does not contribute to the forced regeneration of the particulate filter. Then, the third calculation means calculates a post-injection amount which should be actually injected by the ratio of the post-injection amount which does not contribute to the forced regeneration of the particulate filter (a ratio of a post-injected fuel which does not contribute to increase in exhaust temperature) and the already calculated required post-injection amount. Finally, post-injection is performed with the resulting calculated amount (required injection amount). In this way, since the post-injection amount to be actually injected is set by considering that a part of a fuel post-injected does not contribute to increase in exhaust temperature and thus nor to forced regeneration of a particulate filter, the precision of the forced regeneration of the particulate filter is improved and its effects can be exhibited.

Namely, as a post-injection amount which should be actually injected is determined by considering a ratio of a post-injection amount which does not contribute to forced regeneration of a particulate filter, the regeneration treatment for the filter can be reliably performed. More specifically, a required injection amount calculated by the third calculation means may be larger than a required amount for regeneration calculated by the first calculation amount because a part of the required injection amount may be lost. As a result, exhaust temperature is increased as desired, exhaust particulates are reliably removed by combustion and thus a particulate filter is forcibly regenerated excellently and smoothly.

Further, as a required amount for regeneration and a ratio of a post-injection amount which does not contribute to forced regeneration are calculated depending on filter temperature, engine speed and/or engine load, i.e., on an actual operating state of an engine, from this point of view, the object of post-injection, i.e., forced regeneration of a particulate filter can be accomplished precisely and effectively.

In accordance with the invention, the ratio of the post-injection amount which does not contribute to the forced regeneration of the particulate filter calculated by the second calculation means is a ratio of a residual gas remaining within an inter-cylinder combustion chamber when post-injection is performed and a wall surface adhering ratio of a fuel adhering to the wall surface of a cylinder when the post-injection is performed.

In accordance with this invention, the ratio of the post-injection amount which does not contribute to forced regeneration calculated by the second calculation means is specified. A ratio of a residual gas remaining in an inter-cylinder combustion chamber and a wall surface adhering ratio of a fuel adhering to the wall surface of a cylinder is used. These values (ratios) sensitively respond to variations in an operating state such as filter temperature, engine speed and engine load and have different variation manners. By calculating these parameters on the basis of the operating state and reflecting them for setting a finally required injection amount, a regeneration treatment can be reliably performed for a particulate filter without being influenced by variations in the operating state. As a plurality of (two) factors that do not contribute to forced regeneration, i.e., a residual gas and a wall surface adhering are considered, as compared to the case of considering only one factor, the precision of the forced regeneration for the particulate filter is even further improved.

In accordance with the invention, the control device further comprises pre-injection performing means which determines as to whether or not pre-injection for injecting a fuel during a compression stroke prior to main injection is performed on the basis of at least one detected result from the temperature-related value detection means, the speed detection means and the load detection means and if the pre-injection is performed, controls the fuel injection means to perform the pre-injection.

When a fuel is pre-injected at a timing earlier than the main injection, the fuel is mixed in advance with air, a flame core is gradually made and pre-heat is generated. Thus, the environment that a fuel injected in main injection easily burns can be obtained. Consequently, noises due to burning can be suppressed. Further, combustion temperature is not excessively increased and NOx can be reduced. In accordance with this invention, as a determination is made as to whether or not pre-injection is performed on the basis of an actual operating state of an engine such as filter temperature, engine speed and/or engine load, the objects of the pre-injection, i.e., suppression of noises and reduction in NOx can be accomplished precisely and effectively.

In a preferred embodiment, the invention further comprising means for setting the number of pre-injections that sets the number of pre-injections when the pre-injection is performed on the basis of at least one detected result from the temperature-related value detection means, the speed detection means and the load detection means, wherein the pre-injection performing means is structured so as to perform the pre-injection with the number of injections set by the means for setting the number of pre-injections.

In accordance with this embodiment, the number (divided number) of injections in performing pre-injection by dividing into a plurality of injections is set depending on an operating state of an engine. Accordingly, from this point of view, the objects of the pre-injection, i.e., suppression of noises and reduction in NOx can be accomplished precisely and effectively over wide operating area.

In accordance with the invention, the control device further comprising pre-injection amount correction means for correcting to decrease a pre-injection amount on the basis of the residual gas ratio calculated by the second calculation means, wherein the pre-injection performing means is structured so as to perform the pre-injection with the pre-injection amount corrected to be decreased by the pre-injection amount correction means.

As described above there has been described the problem that a part of a post-injected fuel may remain in a combustion chamber and/or adhere to the wall surface of a cylinder and thus does not contribute to forced regeneration of a particulate filter (i.e., a part of the fuel may adversely effect). On the other hand, there has been described the problem that a part of the post-injected fuel lost as described above may exert an influence upon pre-injection in the next cycle. Apart from a fuel adhering to a cylinder wall surface, a residual gas in post-injection that remains in a combustion chamber or returns thereto is carried over in pre-injection in the next cycle and then combusted. As a result, the same circumstance as in the case of injecting a fuel more than needed in pre-injection occurs and fuel consumption is decreased. Further, objects of pre-injection, i.e., suppression of noises and improvement in emission cannot be accomplished as expected (i.e., noises become worse and NOx is increased).

In accordance with this invention, a pre-injection amount is corrected to be decreased on the basis of a residual gas ratio, i.e., a ratio of a fuel carried over from post-injection in a current cycle to pre-injection in the next cycle (in other words, by estimating a carry over amount from a previous cycle). Then, pre-injection is performed with the decreased corrected amount (pre-injection amount to be actually injected: required pre-injection amount). As it is considered that a part of a fuel post-injected in a previous cycle may remain in a combustion chamber and be combusted in pre-injection in a current cycle, the precision of pre-injection is improved and its effects can be exhibited. As a result, suppression of noises and reduction in NOx can be accomplished excellently and smoothly. Moreover, as it is not necessary to increase a pre-injection amount more than needed, fuel consumption can be improved.

As described above, in accordance with a fuel injection control device for engine of the present application, in an engine structured so as to post-inject a fuel in order to forcibly regenerate a particulate filter, a post-injection amount which should be actually injected is determined by considering that a part of post-injected fuel does not contribute to increase in exhaust temperature and thus nor to the forced regeneration of the particulate filter. Thus, the precision of the forced regeneration of the particulate filter is improved, its effects are exhibited and the regeneration treatment can be reliably performed for the particulate filter. Further, a required amount for regeneration and a ratio of post-injection amount which does not contribute to forced regeneration are calculated on the basis of filter temperature, engine speed and/or engine load, i.e., an actual operating state of an engine. Thus, from this point of view, the object of the post-injection, i.e., forced regeneration for a particulate filter can be accomplished precisely and effectively.

In accordance with the invention, as the ratio of the post-injection amount which does not contribute to forced regeneration of a particulate filter, a ratio of a residual gas remaining in an inter-cylinder combustion chamber and a wall surface adhering ratio of a fuel adhering to the wall surface of a cylinder that sensitively respond to variations in an operating state of an engine and vary in different manners are used, these parameters are calculated on the basis of the operating state of an engine and reflected for setting a final required injection amount. Thus, the regeneration treatment for the particulate filter can be performed reliably without being influenced by variations in the operating state. Two factors, i.e., a residual gas and a wall surface adhering are considered as factors which do not contribute to forced regeneration. Accordingly, as compared to the case of considering only one factor, the precision of the forced regeneration of the particulate filter is even further improved.

In accordance with the invention, a determination as to whether pre-injection is performed or not is made depending on an actual operating state of an engine, i.e., filter temperature, engine speed and/or engine load. Thus, the objects of pre-injection, i.e., suppression of noises and reduction in NOx can be accomplished precisely and effectively.

In accordance with a preferred embodiment, the number of injections is set depending on an operating state of an engine when pre-injection is performed by dividing into a plurality of injections. From this point of view, the objects of pre-injection, i.e., suppression of noises and reduction in NOx can be accomplished precisely and effectively over wide operating area.

In accordance with the invention, a pre-injection amount is corrected to be decreased on the basis of a residual gas ratio, i.e., a ratio of a fuel carried over from post-injection in a previous cycle to pre-injection in a current cycle. Then, pre-injection is performed with the decreased corrected amount serving as a pre-injection amount which should be actually injected. It is considered that a part of fuel post-injected in a previous cycle remains in a combustion chamber and combusted in pre-injection in a current cycle. As a result, the precision of pre-injection is improved, its effects are exhibited, and suppression of noises and reduction in NOx can be accomplished excellently and smoothly. It is possible to prevent a pre-injection amount from being increased more than needed, and thus fuel consumption is improved.

According to the invention, there is further provided a fuel injection control method for an engine, in particular for use with a fuel injection control device according to the invention or a preferred embodiment thereof, comprising the following steps:

detecting an accumulated amount of exhaust particulates accumulated in a particulate filter that is placed on an exhaust path for the engine and captures exhaust particulates;

when an accumulated amount which is equal to or larger than a predetermined amount is detected, performing post-injection for injecting a fuel during an expansion stroke subsequent to main injection for injecting the fuel in a vicinity of a compression top dead center in order to remove by combustion exhaust particulates accumulated in the filter,

detecting a value related to the temperature of the filter, a speed of the engine and/or a load of the engine;

a first calculating step of calculating a post-injection amount required for forced regeneration of the filter on the basis of at least one detected result in the detecting step;

a second calculating step of calculating a ratio of post-injection amount which does not contribute to the forced regeneration of the particulate filter when the post-injection is performed on the basis of at least one detected result in the detecting step; and

a third calculating step of calculating a post-injection amount to be actually injected on the basis of the required post-injection amount calculated in the first calculating step and the ratio of the post-injection amount which does not contribute to the forced regeneration calculated in the second calculating step,

wherein the post-injection is performed with the post-injection amount calculated in the third calculation step.

According to the invention, the ratio of the post-injection amount which does not contribute to the forced regeneration of the particulate filter calculated in the second calculationstep is a ratio of a residual gas remaining within an inter-cylinder combustion chamber when post-injection is performed and a wall surface adhering ratio of a fuel adhering to the wall surface of a cylinder when the post-injection is performed.

The fuel injection control method further comprises a step of determining as to whether or not pre-injection for injecting a fuel during a compression stroke prior to main injection is performed on the basis of at least one detected result relating to the temperature, the speed and/or the load and if the pre-injection is performed, the fuel injection means is controlled to perform the pre-injection.

Further preferably, the fuel injection control method further comprises a step of setting the number of pre-injections that sets the number of pre-injections when the pre-injection is performed on the basis of at least one detected result relating to the temperature, the speed and/or the load,

wherein the pre-injection is performed with the number of injections set by the means for setting the number of pre-injections.

According to the invention, there is further provided a fuel injection control computer program (product) which, when loaded and run on a suitable computer or a fuel injection control system, in particular a fuel injection control device according to the invention or a preferred embodiment thereof, can perform the fuel injection control method according to the invention or a preferred embodiment thereof. Furthermore, the invention provides for a computer-readable storage medium having stored thereon such a computer program.

As described above, the present invention is expected to be industrially utilized for general engines structured so as to post-inject a fuel in order to forcibly regenerate a particulate filter, including diesel engines.

These and other objects, features and advantages of the present invention will become more apparent upon reading of the following detailed description of preferred embodiments and accompanying drawings. It should be understood that even though embodiments are separately described, single features thereof may be combined to additional embodiments.

## BRIEF DESCRIPTION OF THE DRAWINGS

Fig. **1** is a structural view of an engine relating to embodiments of the present invention.

Fig. **2** is a characteristic view used for fuel injection control for the engine (in particular, used for determination whether or not pre-injection is performed).

Figs. **3A** through **3C** are time charts illustrating representative injection patterns for the pre-injection, and Fig. **3A** shows the case of one-stage injection, Fig. **3B** shows the case of two-stage injection and Fig. **3C** shows the case of three-stage injection.

Fig. **4** is a characteristic view used for the fuel injection control for the engine (in particular, used for determination whether or not post-injection is performed).

Figs. **5A** and **5B** are time charts illustrating injection timings and injection amounts for pre-injection, main injection and post-injection, and Fig. **5A** is an explanatory view for the case of the problem to be solved by the present invention and Fig. **5B** is an explanatory view for the case of the present invention which solves the problem.

Fig. **6** is a flowchart illustrating one specific example of control for the post-injection.

Fig. **7** is a flowchart illustrating one specific example of control for the pre-injection.

Fig. **8** is a characteristic view used for calculating a post-injection amount required for forced regeneration of a particulate filter in the control for the post-injection.

Fig. **9** is a characteristic view used for setting post-injection timing.

Fig. **10** is a characteristic view used for calculating a ratio of residual gas remaining in an inter-cylinder combustion chamber

Fig. **11** is a characteristic view used for calculating a wall surface adhering ratio of a fuel adhering to the wall surface of a cylinder.

## DETAILED DESCRIPTION OF THE INVENTION

Embodiments of the present invention will be described hereinafter on the basis of the drawings.

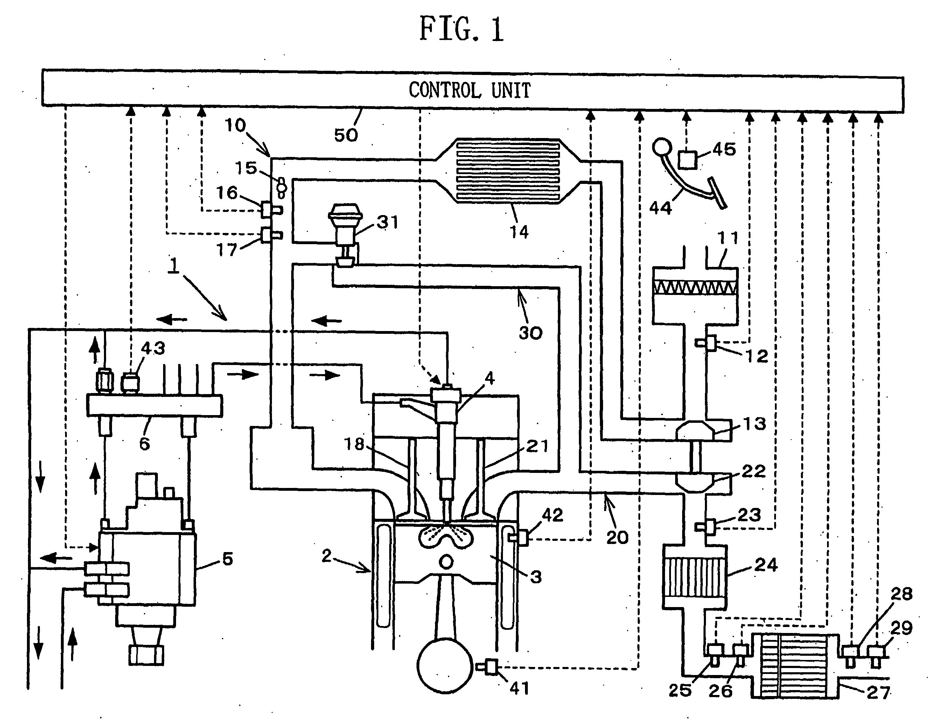

In accordance with this embodiment, the present invention is applied to a diesel engine **1** shown in Fig. **1**. The engine **1** is, for example, a four-cylinder engine and comprises four pistons **3** vertically moving within a cylinder bore of an engine main body **2** (only one piston is illustrated in Fig. **1**). An injector **4** is placed on a cylinder head in the engine main body **2** for each of the cylinders. The injector **4** directly injects a fuel to an inter-cylinder combustion chamber defined by the piston **3**. A high pressure fuel pump **5** and a common rail **6** are disposed on a fuel supply path between an unillustrated fuel tank and the injector **4** (arrows on the path indicate flow of fuel). The pump **5** feeds a fuel in a compressed manner from the fuel tank to the common rail **6**. The common rail **6** accumulates the fuel fed in a compressed manner. When the injector **4** opens its valve, the fuel accumulated in the common rail 6 is injected from a nozzle hole of the injector **4** at high pressure. At this time, fuel injection amount can be controlled by controlling valve-opening time for the injector **4** and fuel pressure within the common rail **6** (i.e., controlling the high pressure pump **5**). Fuel injection timing can be controlled by controlling valve-opening timing for the injector **4**.

Disposed on an intake path **10** are an air cleaner **11**, an airflow meter **12**, a compressor **13** for supercharger, an inter cooler **14**, a throttle valve **15** for adjusting intake amount, an intake temperature sensor **16**, an intake pressure sensor **17** and an intake valve **18** in this order from its upstream side. Disposed on an exhaust path **20** are an exhaust valve **21**, a turbine **22** for supercharger, a first exhaust temperature sensor **23** (which constitutes temperature-related value detection means together with a second exhaust temperature sensor **25** and a third exhaust temperature sensor **29**), an oxidation catalyst **24**, the second exhaust temperature sensor **25**, an upstream side pressure sensor **26** (which constitutes accumulated amount detection means with a downstream side pressure sensor **28**), a particulate filter **27** for capturing exhaust particulates in exhaust gas, the downstream side pressure sensor **28** and the third exhaust temperature sensor **29** in this order from its upstream side. An EGR path **30** is provided between the relatively upstream portion of the exhaust path **20** and the relatively downstream portion of the intake path **10**. On the EGR path **30**, an EGR valve **31** for adjusting reflux amount of exhaust is placed. An engine speed sensor (engine speed detection means) **41** is provided at a crank case for the engine main body **2**, and a water temperature sensor **42** is provided at the cylinder block. A common rail pressure sensor **43** for detecting accumulated pressure of fuel is provided at the common rail **6**. An accelerator pedal opening sensor **45** (load detection means) for detecting amount that an accelerator pedal **44** is applied (accelerator opening) is provided in a car compartment.

A control unit **50** of the engine **1** (ECU) outputs control signals to the injector **4** and the high pressure fuel pump **5** on the basis of intake amount, intake temperature and intake pressure detected by the aforementioned sensors, temperature of exhaust flown into the oxidation catalyst **24**, temperature of exhaust flown into the particulate filter **27**, temperature of exhaust flown from the particulate filter **27**, upstream side pressure and downstream side pressure with the particulate filter **27** being interposed therebetween, engine speed, temperature of cooling water, accumulated pressure of fuel within the common rail **6** and engine load.

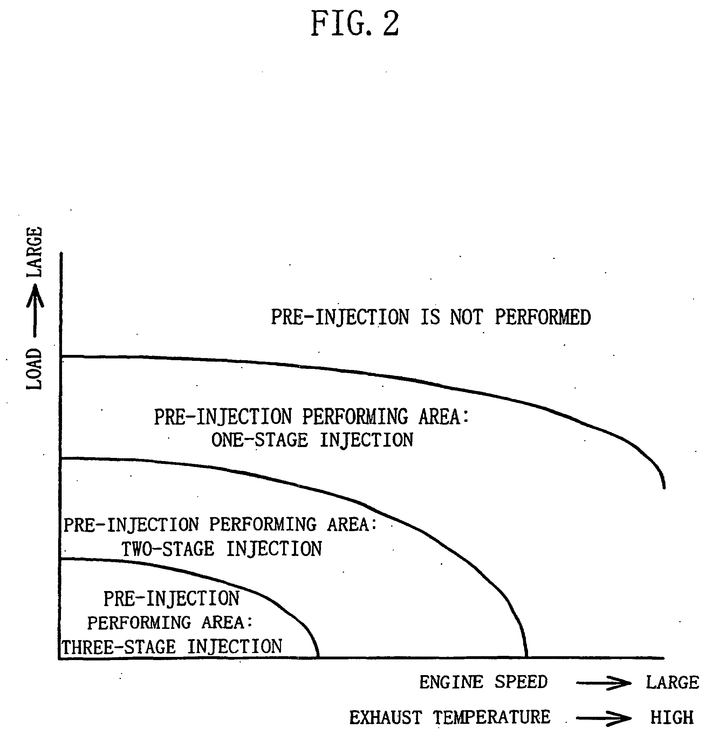

Ordinary fuel injection control by the ECU **50** (fuel injection control for obtaining traveling output) is generally performed as follows. The ECU **50** corrects basic fuel injection amount calculated from the engine load and the engine speed by the temperature of cooling water and the intake temperature to calculate target fuel injection amount Q. The ECU makes reference to characteristics shown in Fig. **2** (stored in advance in the memory for the ECU **50**) to determine whether pre-injection is performed or not on the basis of at least one of the exhaust temperature, the engine speed and the engine load. As generally known, the pre-injection refers to as injection of fuel during a compression stroke prior to main injection for injecting a fuel in a vicinity of a compression top dead center. The pre-injection is performed in order to suppress noises due to burning and to reduce generation of NOx due to excessively high combustion temperature. When the pre-injection is performed, the ECU **50** makes reference to the characteristics shown in Fig. **2** and sets the number the pre-injection is performed on the basis of at least one of the exhaust temperature, the engine speed and the engine load.

As shown in Fig. **2**, the pre-injection is not performed in a high load and high speed area. Namely, all of the target fuel injection amount Q calculated as described above is injected at a time in the main injection. This is because ensuring an output is more important than the noise problem in the high load and high speed area. In areas with lower load and lower speed, the number of performing the pre-injection (the number of divided injections) is increased. As the number of pre-injections is increased, the fuel injection amount of the target fuel injection amount Q that is injected in the main injection is reduced. Further, a flame core is made earlier and thus the objects of the pre-injection can be accomplished effectively. This is because the areas with lower load and lower speed have reduction in noise and the noise problem stands out.

As described above, determination as to whether or not pre-injection is performed and if the pre-injection is performed, setting about how many times the pre-injection is performed (the number of divided injections) depending on an actual operating state of the engine 1 such as the exhaust temperature, the engine speed and the engine load. Thus, the objects of the pre-injection, i.e., suppression of noises and reduction in NOx can be accomplished precisely and effectively over wide operation area.

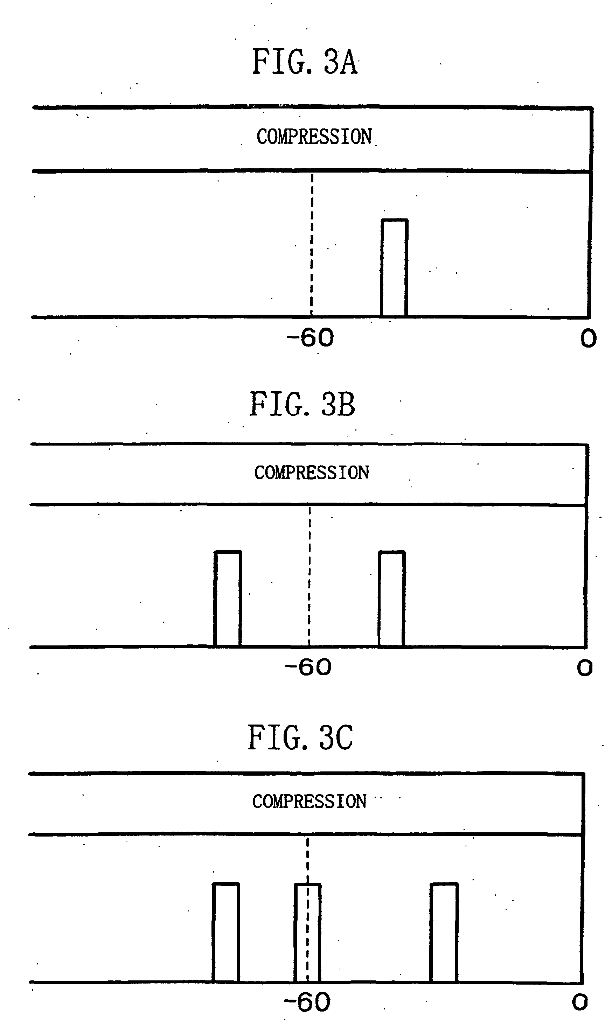

For reference, Figs. **3A** through **3C** show representative injection patterns for pre-injection. A horizontal axis indicates a crank angle and a compression top dead center is 0°. As shown in Fig. **3A**, in one-stage injection, pre-injection is performed only one time within the range of -60° from the compression top dead center. On the other hand, as shown in Fig. **3B**, in two-stage injection, the pre-injection is performed one more time over the range of -60° from the compression top dead center. As shown in Fig. **3C**, in three-stage injection, the pre-injection is further performed one more time in a vicinity of the range of -60° from the compression top dead center.

As the exhaust temperature, detected results from one or two of the first to third exhaust temperature sensors **23**, **25** and **29** may be utilized. Exhaust temperatures detected by these exhaust temperature sensors **23**, **25** and **29** relate to the temperature of the particulate filter **27**. The detected result of the second exhaust temperature sensor **25** which is disposed at the immediately upstream of the particulate filter **27** and detects the temperature of exhaust flown into the filter **27** approximates most the temperature of the particulate filter **27**.

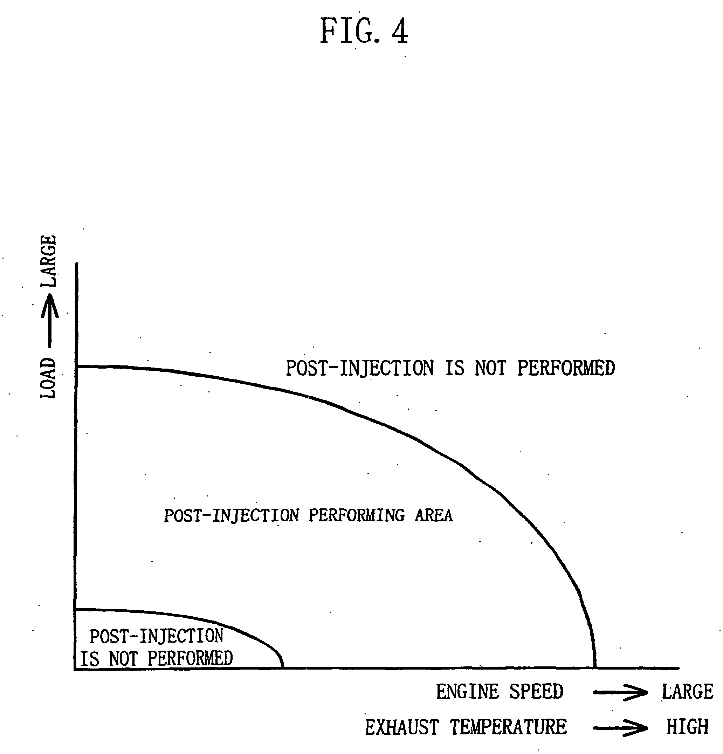

The ECU **50** performs post-injection serving as a characteristic of the present invention in addition to the ordinary fuel injection control. Post-injection is referred to as injection of a fuel during an expansion stroke subsequent to main injection for injecting a fuel in a vicinity of a compression top dead center. The post- injection is performed in order to heat the particulate filter **27** and increase its temperature by combusting an unburnt hydrocarbon component generated by the post-injection with the oxidation catalyst **24** within the exhaust path **20** so as to remove by combustion exhaust particulates accumulated in the filter and forcibly regenerate the filter **27**. The ECU **50** makes reference to characteristics shown in Fig. **4** (stored in advance in the memory for the ECT **50**) and determines whether or not the post-injection is performed on the basis of at least one of exhaust temperature (which is a value relating to the temperature of the particulate filter **27**), engine speed and engine load.

As shown in Fig. **4**, the post-injection is not performed in a high load and high speed area and a low load and low speed area. Reasons for this are as follows. Namely, it is considered that the temperature of the particulate filter **27** or an exhaust gas must be increased to 600°C or higher in order to remove by combustion accumulated exhaust particulates. In the high load and high speed area, the exhaust temperature reaches 600°C or higher only by performing the main injection and thus the post-injection does not need to be performed. On the other hand, in the low load and low speed area, the exhaust temperature is merely around 200°C only with the main injection. Since the original exhaust temperature is excessively low, even if unburnt components are combusted by the oxidation catalyst **24**, the temperature of an exhaust gas flown into the particulate filter **27** is not increased to 600°C or higher. Thus, in the low load and low speed area, the object of the post-injection cannot be accomplished no matter how many times the post-injection is performed.

The ECU **50** determines that the filter **27** is clogged if an accumulated amount of exhaust particulates accumulated in the particulate filter **27** is equal to or larger than a predetermined amount, and then performs the post-injection for heating the filter **27**. Here, as described above, it is presupposed that the operating state is in a post-injection performing area shown in Fig. **4**. The accumulated amount of exhaust particulates may be substituted by the differential pressure between the upstream side pressure and the downstream side pressure with the particulate filter **27** being interposed therebetween or a pressure ratio. Namely, it is determined that the accumulated amount becomes equal to or larger than a predetermined amount if the differential pressure or the pressure ratio is equal to or larger than a predetermined value.

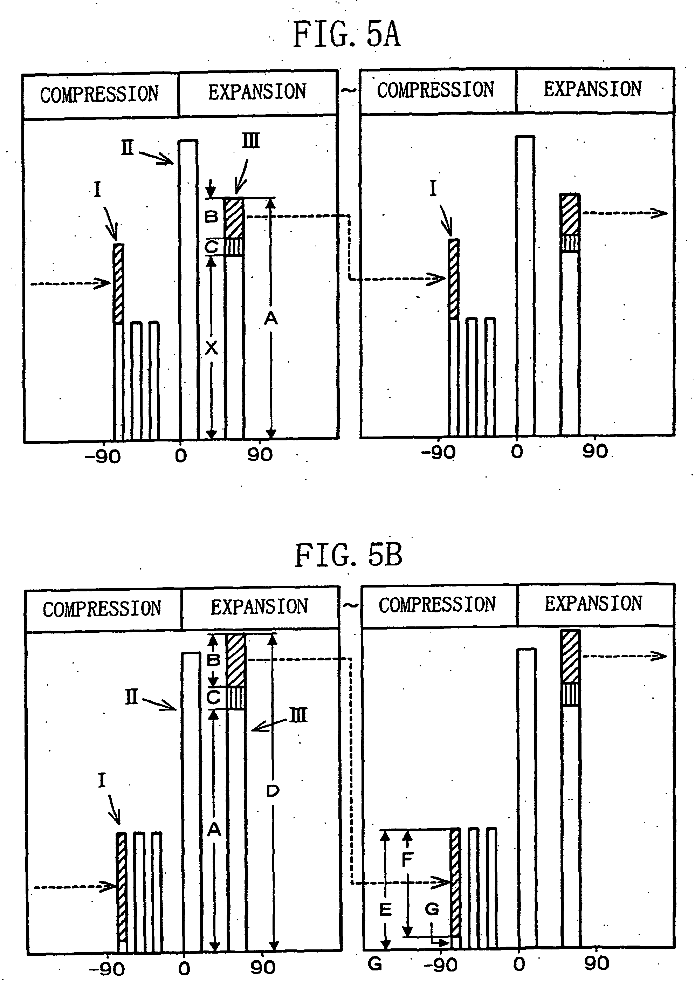

Figs. **5A** and **5B** illustrate typical examples of injection timings and injection amounts when three injection stages, i.e., a pre-injection (I), a main injection (II) and a post-injection (III) are performed. In the figures, horizontal axes indicate a crank angle and a compression top dead center is 0° as in Figs. **3**. Suppose that post-injection is performed with a post-injection amount required to forcibly regenerate the particulate filter **27** as indicated by the reference symbol **A** in Fig. **5A**. The total amount **A** of post-injected fuel is not discharged from a combustion chamber to the exhaust path **20** in a subsequent exhaust stroke but a part of the fuel (indicated by the reference symbol **B**) remains in the combustion chamber or returns to the same as a residual gas. Alternatively, a part of the post-injected fuel (indicated by the reference symbol **C**) may adhere to the wall surface of a cylinder exposed because of the piston **3** being descended in an expansion stroke. These fuels indicated by the reference symbols **B** and **C** are not burnt in the exhaust path **20** nor contribute to an increase in exhaust temperature and the forced regeneration of the particulate filter **27**. As a result, a fuel with an amount **X** less than the required amount **A** for regeneration by the amounts of the fuels **B** and **C** is discharged into the exhaust path **20**, combusted by the oxidation catalyst **24** and used for increasing the temperature of an exhaust gas. Consequently, heating of the particulate filter **27** is insufficient and the forced regeneration of the filter **27** cannot attain expected results.

Apart from the fuel **C** adhering to the cylinder wall surface, the residual gas **B** remaining in the combustion chamber or returning thereto is carried over in pre-injection (I) for the next cycle and then is combusted. As a result, circumstances that are the same as in the case of injecting more fuel than needed in the pre-injection (I) occur and fuel consumption is decreased. Further, objects of the pre-injection (I) such as suppression of noises and improvement of emission cannot attain expected results.

Referring to Fig. **5B**, in order to solve the first problem about the post-injection, the ECU **50** firstly calculates a post-injection amount **A** required for forced regeneration of the particulate filter **27**. At this time, the required amount **A** for regeneration is not post-injected as it is. Instead, a part of the required amount **A** is estimated to be lost and thus a fuel with an amount **D** larger than the required amount **A** for regeneration is post-injected. The ECU **50** calculates a ratio **B** of a residual gas remaining in a combustion chamber when the post-injection is performed (0 < **B** < 1) and a wall surface adhering ratio **C** that a fuel may adhere to the wall surface of a cylinder (0 = < **C** < 1). Then, a post-injection amount **D** which should be actually injected from the injector 4 is calculated from the residual gas ratio **B** and the wall surface adhering ratio **C**, i.e., the ratio of fuel which does not contribute to an increase in exhaust temperature nor to the forced regeneration of the particulate filter **27** and the already calculated required amount A for regeneration. Then, post-injection is performed by the required injection amount **D**, so that a fuel with the amount **A** required for the forced regeneration of the particulate filter **27** is discharged from a combustion chamber to the exhaust path **20**. Consequently, the exhaust temperature is increased as needed, exhaust particulates are reliably removed by combustion and the particulate filter **27** is forcibly regenerated excellently and smoothly. In this way, the post-injection is performed by taking into consideration the fact that a part of post-injected fuel may remain in a combustion chamber and adhere to the wall surface of a cylinder and thus does not contribute to an increase in exhaust temperature. Accordingly, the precision of the forced regeneration of the particulate filter **27** is improved and its effects can be exhibited. More specifically, the required injection amount **D** is calculated from the required post-injection amount **A**, the residual gas ratio **B** and the wall surface adhering ratio **C** in accordance with the following formula 1.

[Formula 1]

When transforming the formula $D \times B + D \times C + A = D$, the following formula can be derived.

$$A = D - D \times B - D \times C$$

$$= D (1 - B - C)$$

$$\text{Then, } D = A / (1 - B - C)$$

Further, the ECU **50** calculates a pre-injection amount **E** in the above-described ordinary fuel injection control as shown in Fig. **5B** in order to solve the second problem about the pre-injection. At this time, the pre-injection amount **E** is not pre-injected as it is. Instead, an amount **F** of a fuel carried over from the post-injection for a previous cycle is estimated and thus a fuel with an amount **G** less than the pre-injection amount **E** is pre-injected. The ECU **50** corrects to decrease the already calculated pre-injection amount **E** on the basis of the residual gas ratio **B**, i.e., a ratio of a fuel carried over from the post-injection in the previous cycle to the pre-injection in the current cycle. The decreased corrected amount **G** is pre-injected as a pre-injection amount to be actually injected from the injector **4.** As a result, a fuel with an amount corresponding to the pre-injection amount **E** which is the sum of the corrected amount **G** and the carry over amount **F** exists within a combustion chamber in a compression stroke. Accordingly, suppression of noises and reduction in NOx can be accomplished excellently and smoothly. Further, because the pre-injection amount can be prevented from increasing more than needed, fuel consumption can be improved. As described above, the pre-injection is performed by taking into consideration the fact that a part of a fuel post-injected in a previous cycle remains in a combustion chamber and is combusted in a pre-injection in the current cycle, so that the precision of the pre-injection is improved and its effects can be exhibited. More specifically, the required pre-injection amount **G** is calculated from the pre-injection amount **E**, the required injection amount **D** and the residual gas ratio **B** (which are values in a previous cycle) in accordance with the following formula 2.

[Formula 2]

$$G = E - F$$

$$= E - D \times B$$

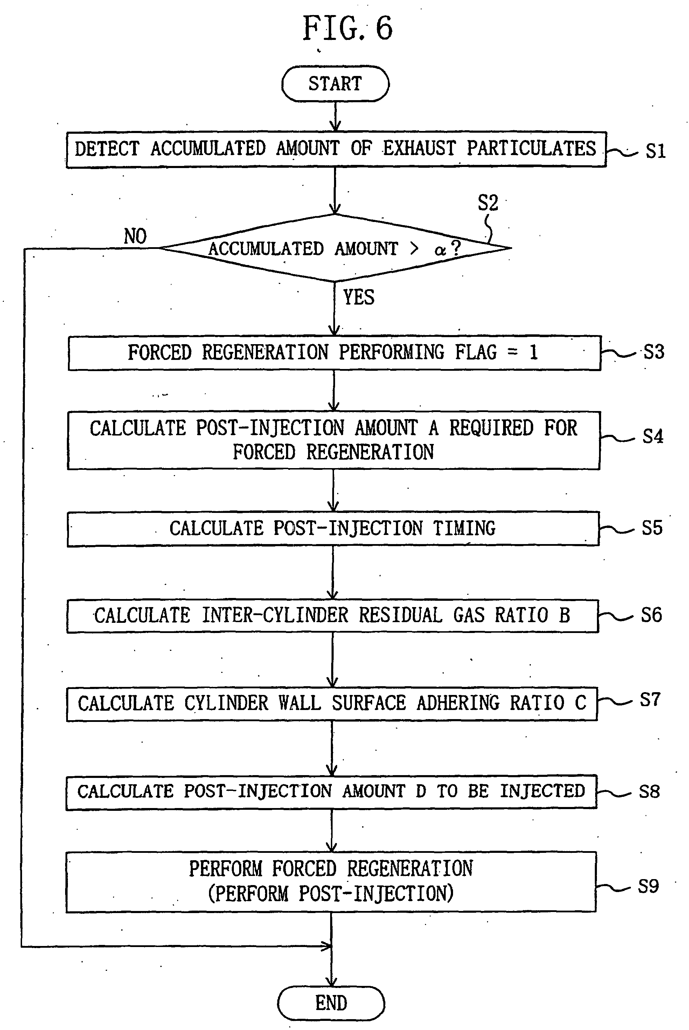

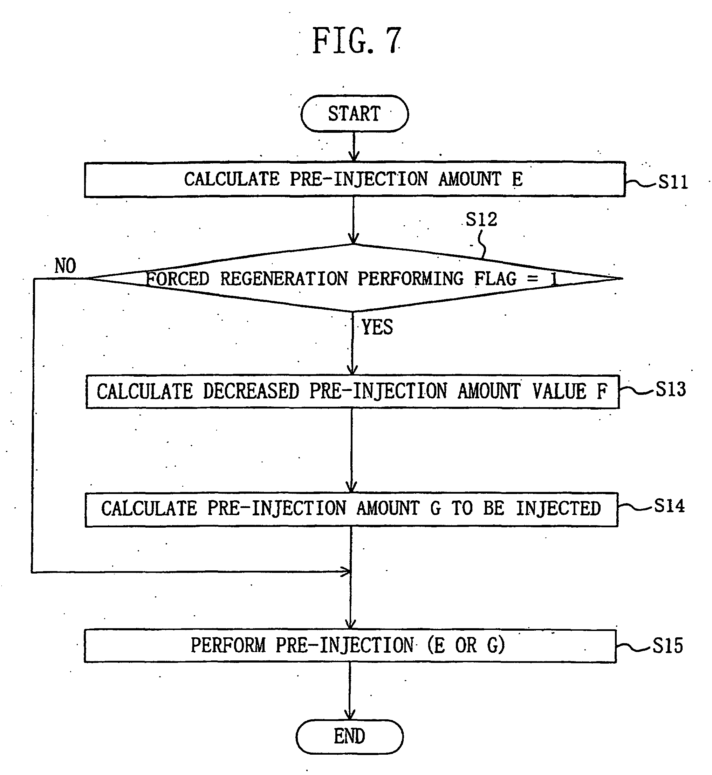

Fig. **6** is a flowchart illustrating a specific example of controlling the above-described post-injection. Fig. **7** is a flowchart illustrating a specific example of controlling the above-described pre-injection. It is presupposed in these flowcharts that the operating states are in the post-injection performing area shown in Fig. **4** and in the pre-injection performing area shown in Fig. **2**, respectively. For the post-injection, referring to Fig. **6**, an accumulated amount of exhaust particulates accumulating in the particulate filter **27** is detected in step **S1** (from the differential pressure between an upstream side pressure and a downstream side pressure for the filter **27** or the pressure ratio, as described above). If it is determined in step **S2** that the accumulated amount is equal to or larger than a predetermined amount α, a forced regeneration performing flag is set to 1 in step **S3**. Then, the post-injection amount **A** required for forced regeneration, the post-injection timing, the residual gas ratio **B** and the wall surface adhering ratio **C** are calculated in steps **S4** to **S7**.

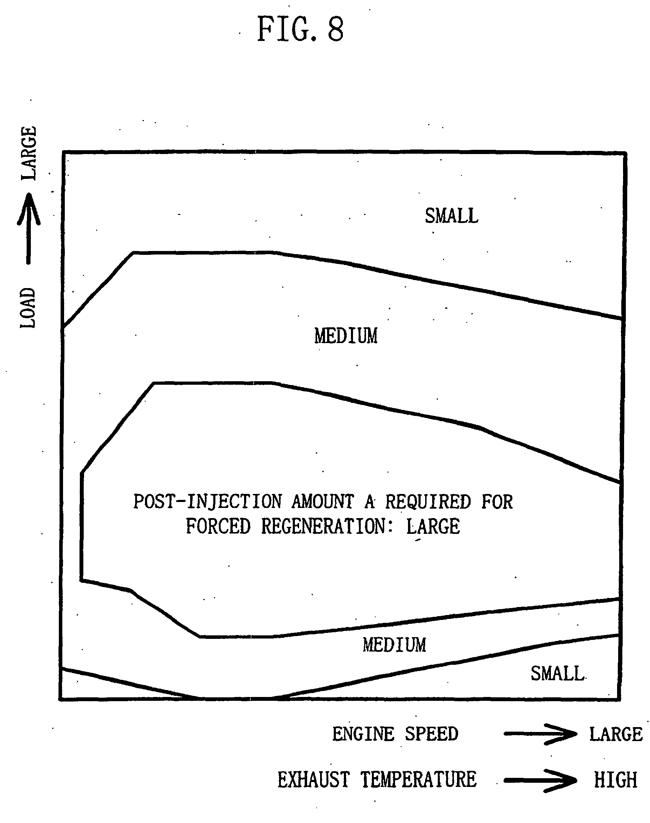

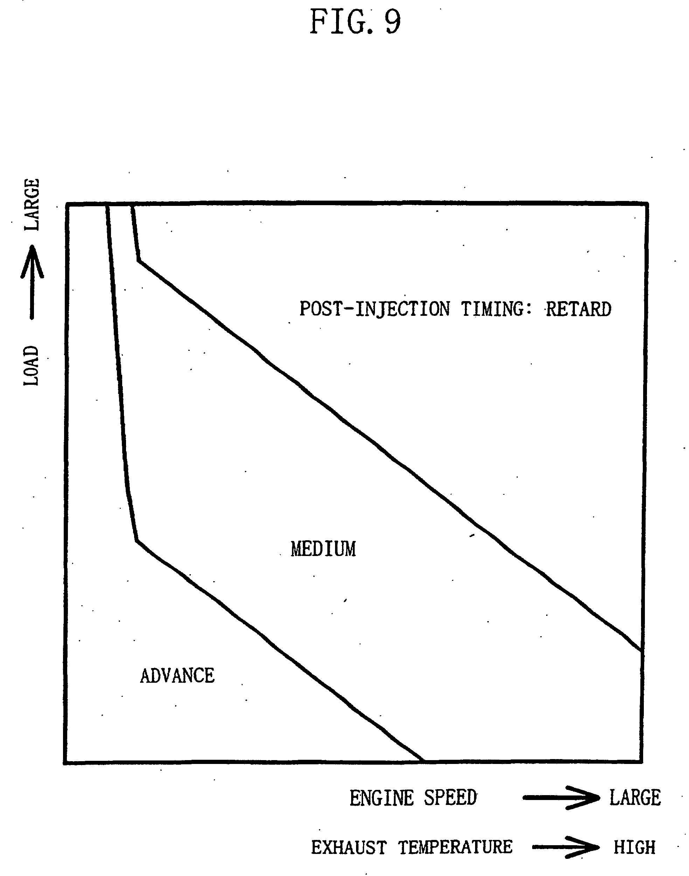

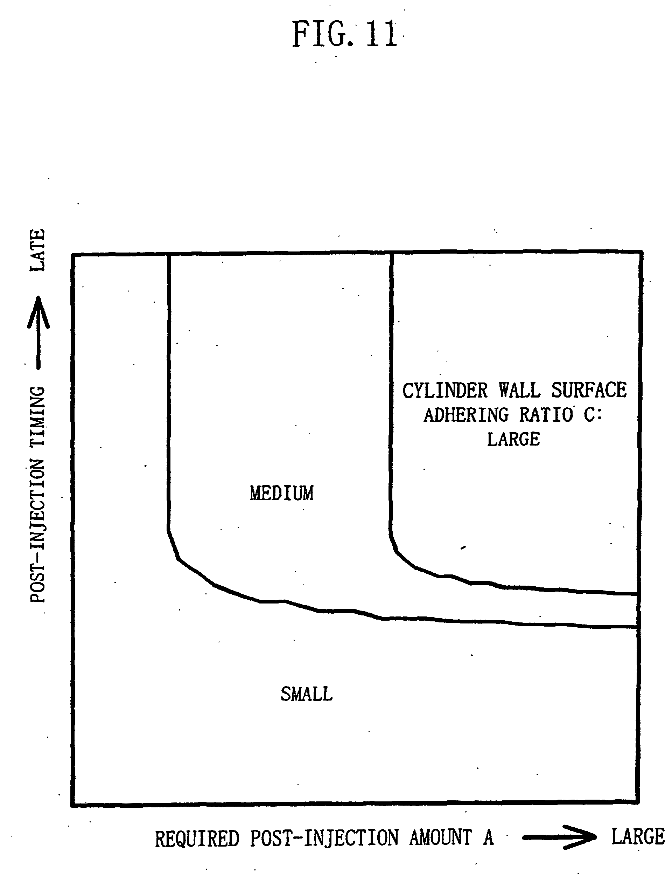

The aforementioned values are logically calculated with reference to characteristics shown in Figs. **8** through **11** (stored in advance in the memory for the ECT **50**) on the basis of at least one of the exhaust temperature (which is a value related to the temperature of the particulate filter **27** as described above), the engine speed and the engine load. The wall surface adhering ratio **C** is calculated, according to characteristics shown in Fig. **11**, on the basis of the post-injection amount **A** required for forced regeneration and the post-injection timing. Nevertheless, because the post-injection amount **A** required for forced regeneration and the post-injection timing are calculated based on the exhaust temperature, the engine speed and the engine load, the wall surface adhering ratio **C** may be considered to be calculated (indirectly) on the basis of at least one of the exhaust temperature, the engine speed and the engine load.

As described above, the required amount **A** for regeneration, the residual gas ratio **B** and the wall surface adhering ratio **C** are calculated on the basis of an actual operating state of the engine **1** such as filter temperature, engine speed and engine load. Thus, from this point of view, the object of the post-injection, i.e., the forced regeneration of the particulate filter **27** can be accomplished precisely and effectively.

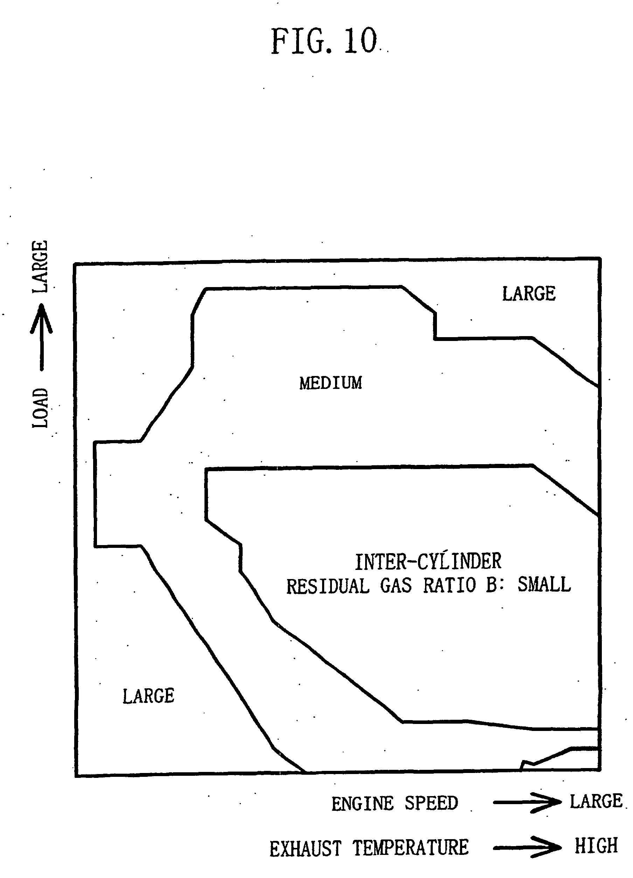

Specifically, the residual gas ratio **B** and the wall surface adhering ratio **C** are utilized as a ratio of a post-injection amount which does not contribute to forced regeneration. These parameters **B** and **C** respond sensitively to variations in the operating state of the engine **1** such as the temperature of the filter **27**, the engine speed and the engine load as shown in Figs. **10** and **11**, and vary with independent and original manners and characteristics. Thus, by calculating these parameters **B** and **C** on the basis of the operating state and reflecting them for setting of the final required injection amount **D**, a regeneration treatment can be reliably performed for the particulate filter **27** without being influenced by variations in the operating state. Further, the residual gas ratio **B** and the wall surface adhering ratio **C** are considered as factors which do not contribute to forced regeneration. Thus, as compared to the case that only one of them is considered, the precision of the forced regeneration of the particulate filter **27** is even further improved.

A post-injection amount **D** to be injected is calculated in step **S8** in accordance with, e.g., the above-described formula 1. In step **S9**, the post-injection is performed with the finally calculated post-injection amount (required injection amount) **D**. Namely, the forced regeneration of the particulate filter **27** is performed.

In the case of the pre-injection, referring to Fig. **7**, a pre-injection amount E is calculated in step **S11** (as a process in the ordinary fuel injection control as described above). It is determined in step **S12** as to whether the forced regeneration performing flag is set to 1 or not. (This flag is set to 1 in step **S3** in Fig. **6** when the post-injection is performed.) If the flag is set to 0 (i.e., if the post-injection is not performed), the influence of the amount **F** carried over from a previous cycle is not exerted. Then, the process jumps to step **S15**, and the pre-injection is performed by using the pre-injection amount **E** as it is. On the other hand, if the forced regeneration performing flag is set to 1 (i.e., if the post-injection is performed), the influence of the amount **F** carried over from a previous cycle is exerted. Thus, in step **S13**, the carry over amount (decreased pre-injection amount) **F** is calculated in accordance with, e.g., the above-described formula 2. In step **S14**, the pre-injection amount **G** to be injected is also calculated in accordance with, e.g., the above-described formula 2. In step **S15**, the pre-injection is performed with the finally calculated pre-injection amount (required injection amount) **G**.

Accordingly, a post-injection amount **A** required for forced regeneration of a particulate filter is calculated. **A** ratio **B** of a residual gas remaining in an inter-cylinder combustion chamber when post injection is performed and a wall surface adhering ratio **C** of a fuel adhering to the wall surface of a cylinder when the post-injection is performed are calculated. A post-injection amount **D** to be actually injected is calculated on the basis of the residual gas ratio **B** and the wall surface adhering ratio **C**, i.e., a ratio of a fuel which does not contribute to increase in exhaust temperature nor to the forced regeneration of the particulate filter and the already calculated required post-injection amount **A**. Then, the post-injection is performed with the calculated required injection amount **D**. Because the post-injection amount is determined by taking into consideration the fact that a part of a post-injected fuel may remain in a combustion chamber or adhere to the wall surface of a cylinder and thus does not contribute to increase in exhaust temperature, the precision of the forced regeneration of the particulate filter is improved and its effects can be exhibited.

## Claims

1. A fuel injection control device for engine comprising:

     a particulate filter **(27)** that is placed on an exhaust path for the engine and captures exhaust particulates;
     accumulated amount detection means **(26, 28)** for detecting an accumulated amount of exhaust particulates accumulated in the particulate filter **(27)**;
     fuel injection means **(4)** for directly injecting a fuel into an inter-cylinder combustion chamber for the engine; and particulate filter forced regeneration means **(50)** which, when an accumulated amount which is equal to or larger than a predetermined amount is detected by the accumulated amount detection means **(26, 28)**, controls the fuel injection means **(4)** to perform post-injection for injecting a fuel during an expansion stroke subsequent to main injection for injecting the fuel in a vicinity of a compression top dead center in order to remove by combustion exhaust particulates accumulated in the filter **(27)**,

     said fuel injection control device comprising:

     temperature-related value detection means **(23, 25, 29)** for detecting value related to the temperature of the filter **(27)**;
     speed detection means **(41)** for detecting the speed of the engine;
     load detection means **(45)** for detecting the load of the engine; first calculation means **(50)** for calculating a post-injection amount required for forced regeneration of the filter **(27)** on the basis of at least one detected result from the detection means **(23, 25, 29, 41, 45)**;

     **characterized by**
     second calculation means **(50)** for calculating a ratio of post-injection amount when the post-injection is performed on the basis of at least one detected result from the detection means **(23, 25, 29, 41, 45)**,
     wherein said ratio of post-injection amount does not contribute to the forced regeneration of the particulate filter **(27)** and which is a ratio of a residual gas remaining within an inter-cylinder combustion chamber when post-injection is performed and a wall surface adhering ratio of a fuel adhering to the wall surface of a cylinder when the post-injection is performed;
     third calculation means **(50)** for calculating a post-injection amount to be actually injected on the basis of the required post-injection amount calculated by the first calculation means **(50)** and the ratio of the post-injection amount which does not contribute to the forced regeneration calculated by the second calculation means **(50)**,
     wherein the forced regeneration means **(50)** is structured so as to perform post-injection with the post-injection amount calculated by the third calculation means **(50)**;
     pre-injection performing means **(50)** which determines as to whether or not pre-injection for injecting a fuel during a compression stroke prior to main injection is performed on the basis of at least one detected result from the temperature-related value detection means **(23, 25, 29)**, the speed detection means **(41)** and the load detection means **(45)** and if the pre-injection is performed, controls the fuel injection means to perform the pre-inj ection;
     pre-injection amount correction means **(50)** for correcting to decrease a pre-injection amount on the basis of the residual gas ratio calculated by the second calculation means **(50),** and
     wherein the pre-injection performing means **(50)** is structured so as to perform the pre-injection with the pre-injection amount corrected to be decreased by the pre-injection amount correction means **(50).**

2. The fuel injection control device for engine of Claim 1 further comprising means **(50)** for setting the number of pre-injections that sets the number of pre-injections when the pre-injection is performed on the basis of at least one detected result from the temperature-related value detection means **(23, 25, 29)**, the speed detection means **(41)** and the load detection means **(45)**,

wherein the pre-injection performing means **(50)** is structured so as to perform the pre-injection with the number of injections set by the means for setting the number of pre-injections.

3. A fuel injection control method for an engine comprising the following steps:

detecting an accumulated amount of exhaust particulates accumulated in a particulate filter **(27)** that is placed on an exhaust path for the engine and captures exhaust particulates;

when an accumulated amount which is equal to or larger than a predetermined amount is detected, performing post-injection for injecting a fuel during an expansion stroke subsequent to main injection for injecting the fuel in a vicinity of a compression top dead center in order to remove by combustion exhaust particulates accumulated in the filter **(27)**,

detecting a value related to the temperature of the filter **(27)**, a speed of the engine and/or a load of the engine;

a first calculating step of calculating a post-injection amount required for forced regeneration of the filter **(27)** on the basis of at least one detected result in the detecting step;

**characterized by**

a second calculating step of calculating a ratio of post-injection amount which does not contribute to the forced regeneration of the particulate filter **(27)** when the post-injection is performed on the basis of at least one detected result in the detecting step;

wherein the ratio of the post-injection amount which does not contribute to the forced regeneration of the particulate filter **(27)** calculated in the second calculationstep is a ratio of a residual gas remaining within an inter-cylinder combustion chamber when post-injection is performed and a wall surface adhering ratio of a fuel adhering to the wall surface of a cylinder when the post-injection is performed;

a third calculating step of calculating a post-injection amount to be actually injected on the basis of the required post-injection amount calculated in the first calculating step and the ratio of the post-injection amount which does not contribute to the forced regeneration calculated in the second calculating step,

wherein the post-injection is performed with the post-injection amount calculated in the third calculation step;

a step of determining as to whether or not pre-injection for injecting a fuel during a compression stroke prior to main injection is performed on the basis of at least one detected result relating to the temperature, the speed and/or the load and if the pre-injection is performed, the fuel injection means is controlled to perform the pre-injection;

a step of correcting a pre-injection amount to decrease the pre-injection amount on the basis of the residual gas ratio calculated in the second calculation step, and

a step of performing the pre-injection with the pre-injection amount corrected to be decreased in the step of correcting the pre-injection amount.

4. The fuel injection control method for engine of Claim 3 further comprising a step of setting the number of pre-injections that sets the number of pre-injections when the pre-injection is performed on the basis of at least one detected result relating to the temperature, the speed and/or the load,

wherein the pre-injection is performed with the number of injections set by the means for setting the number of pre-injections.

5. A fuel injection control computer program product which, when loaded and run on a suitable computer, can perform the fuel injection control method according to one or more of the preceding claims 3 or 4.


**Patentansprüche**

1. Vorrichtung zur Steuerung bzw. Regelung der Kraftstoffeinspritzung für einen Motor, umfassend:

ein Partikel- bzw. Ruß- bzw. Teilchenfilter (27), welches an einem Auspuff- bzw. Abgasweg für den Motor angeordnet ist und Abgasteilchen bzw. -partikel bzw. -Ruß fängt;

Detektionsmittel (26, 28) der angesammelten bzw. akkumulierten Menge zum Detektieren einer angesammelten Menge von Abgasteilchen, welche sich in dem Teilchenfilter (27) gesammelt haben;

Kraftstoff-Einspritzmittel (4) zum direkten Einspritzen eines Kraftstoffs in eine Verbrennungskammer in einem Zylinder für den Motor; und

Mittel (50) für eine zwangsweise Regeneration des Teilchenfilters, welche, wenn eine angesammelte Menge, welche gleich oder größer als eine vorbestimmte Menge ist, durch die Detektionsmittel (26, 28) der angesammelten Menge detektiert ist, die Kraftstoff-Einspritzmittel (4) regeln bzw. steuern, um eine Nacheinspritzung zum Einspritzen eines Kraftstoffs während eines Expansionshubs nachfolgend auf eine Haupteinspritzung zum Einspritzen des Kraftstoffs in einer Nähe eines oberen Totpunkts einer Kompression durchzuführen, um durch eine Verbrennung bzw. Combustion Abgasteilchen zu entfernen, welche sich in dem Filter (27) angesammelt haben,

wobei die Vorrichtung zur Steuerung der Kraftstoffeinspritzung umfaßt:

Detektionsmittel (23, 25, 29) eines auf eine Temperatur bezogenen Werts zum Detektieren eines Werts, welcher sich auf die Temperatur des Filters (27) bezieht bzw. mit diesen in Verbindung steht;
Geschwindigkeits- bzw. Drehzahl-Detektionsmittel (41) zum Detektieren der Drehzahl bzw. Geschwindigkeit des Motors;
Lastdetektionsmittel (45) zum Detektieren der Last des Motors;
erste Berechnungsmittel (50) zum Berechnen einer Nacheinspritzmenge, welche für eine erzwungene Regeneration des Filters (27) erforderlich ist, und zwar auf der Basis von wenigstens einem detektierten Resultat von den Detektionsmitteln (23, 25, 29, 41, 45);

**gekennzeichnet durch**

zweite Berechnungsmittel (50) zum Berechnen eines Verhältnisses bzw. Anteils einer Nacheinspritzmenge, wenn die Nacheinspritzung durchgeführt ist bzw. wird, und zwar auf der Basis von wenigstens einem detektierten Resultat von den Detektionsmitteln (23, 25, 29, 41, 45), wobei das Verhältnis einer Nacheinspritzmenge nicht zu der erzwungenen Regeneration des Teilchenfilters (27) beiträgt und welches ein Verhältnis eines Restgases, welches innerhalb bzw. in einer Zwischenzylinderverbrennungskammer in einer Verbrennungskammer eines Zylinders verbleibt, wenn eine Nacheinspritzung durchgeführt ist, und ein Wandflächen-Anhaftungsverhältnis von Kraftstoff ist, welcher an der Wandfläche bzw. -oberfläche eines Zylinders anhaftet, wenn die Nacheinspritzung durchgeführt ist;
dritte Berechnungsmittel (50) zum Berechnen einer Nacheinspritzmenge, welche tatsächlich einzuspritzen ist, und zwar auf der Basis der erforderlichen Nacheinspritzmenge, welche **durch** die ersten Berechnungsmittel (50) berechnet ist, und des Verhältnisses der Nacheinspritzmenge, welche nicht zu der erzwungenen Regeneration beiträgt, welche **durch** die zweiten Berechnungsmittel (50) berechnet ist,
wobei die Mittel (50) zur erzwungenen Regeneration derart strukturiert sind, um eine Nacheinspritzung mit der Nacheinspritzmenge durchzuführen, welche **durch** die dritten Berechnungsmittel (50) berechnet ist;
eine Voreinspritzung durchführende Mittel (50), welche bestimmt, ob eine Voreinspritzung zum Einspritzen eines Kraftstoffs während eines Kompressionshubs vor einer Haupteinspritzung durchgeführt ist, und zwar auf der Basis von wenigstens einem detektierten Resultat von den Mitteln (23, 25, 29) der Detektion eines auf die Temperatur bezogenen Werts, den Drehzahl-Detektionsmitteln (41) und den Lastdetektionsmitteln (45) bestimmen, und wenn die Voreinspritzung durchgeführt ist bzw. wird, die Kraftstoff-Einspritzmittel regeln bzw. steuern, um die Voreinspritzung durchzuführen;
Voreinspritzmengen-Korrekturmittel (50) zum Korrigieren, um eine Voreinspritzungsmenge auf der Basis des Restgasverhältnisses zu verringern, welches **durch** die zweiten Berechnungsmittel (50) berechnet ist bzw. wird, und wobei die eine Voreinspritzung durchführenden Mittel (50) strukturiert sind, um die Voreinspritzung mit der Voreinspritzungsmenge durchzuführen, welche korrigiert ist, um **durch** die Voreinspritzungsmengen-Korrekturmittel (50) verringert zu sein bzw. zu werden.

2. Vorrichtung zur Steuerung der Kraftstoffeinspritzung für einen Motor nach Anspruch 1, weiters umfassend Mittel (50) zum Einstellen der Anzahl von Voreinspritzungen, welche die Anzahl von Voreinspritzungen, wenn die Voreinspritzung durchgeführt ist, auf der Basis von wenigstens einem detektierten Resultat von den Mitteln (23, 25, 29) der Detektion eines auf eine Temperatur bezogenen Werts, den Drehzahl-Detektionsmitteln (41) und den Lastdetektionsmitteln (45) einstellen, wobei die eine Voreinspritzung durchführenden Mittel (50) so strukturiert sind, um die Voreinspritzung mit der Anzahl von Einspritzungen durchzuführen, welche durch die Mittel zum Einstellen der Anzahl von Voreinspritzungen eingestellt ist.

3. Verfahren zur Steuerung der Kraftstoffeinspritzung für einen Motor, umfassend die folgenden Schritte:

Detektieren einer angesammelten Menge von Abgasteilchen bzw. -partikeln bzw. - Ruß, welche in einem Partikel- bzw. Ruß- bzw. Teilchenfilter (27) angesammelt bzw. akkumuliert werden, welches an einem Abgas- bzw. Auspuffweg für den Motor angeordnet wird und Abgasteilchen fängt;

wenn eine gesammelte Menge, welche gleich oder größer als eine vorbestimmte Menge ist, detektiert wird, Durchführen einer Nacheinspritzung zum Einspritzen eines Kraftstoffs während eines Expansionshubs nachfolgend auf eine Haupteinspritzung zum Einspritzen des Kraftstoffs in einer Nähe eines oberen Totpunkts einer Kompression, um durch eine Verbrennung bzw. Combustion Abgasteilchen zu entfernen, welche sich in dem Filter (27) angesammelt haben,

Detektieren eines Werts, welcher sich auf die Temperatur des Filters (27), eine Geschwindigkeit bzw. Drehzahl eines Motors und/oder eine Last des Motors bezieht bzw. mit diesem bzw. diesen in Beziehung steht;

einen ersten Berechnungsschritt eines Berechnens einer Nacheinspritzmenge, welche für eine erzwungene Regeneration des Filters (27) erforderlich ist, und zwar auf der Basis von wenigstens einem detektierten Resultat in dem Detektionsschritt;

**gekennzeichnet durch**

einen zweiten Berechnungsschritt eines Berechnens eines Verhältnisses einer Nacheinspritzmenge, welche nicht zu der erzwungenen Regeneration des Teilchenfilters (27) beiträgt, wenn die Nacheinspritzung durchgeführt wird, und zwar auf der Basis von wenigstens einem detektierten Resultat in dem Detektionsschritt ;

wobei das Verhältnis bzw. der Anteil der Nacheinspritzmenge, welche nicht zu der erzwungenen Regeneration des Teilchenfilters (27) beiträgt, weiche in dem zweiten Berechnungsschritt berechnet wird, ein Verhältnis eines Restgases, welches innerhalb einer Verbrennungskammer innerhalb eines Zylinders bzw. in einer Zwischenzylinderverbrennungskammer verbleibt, wenn eine Nacheinspritzung durchgeführt wird, und ein Wandflächen-Anhaftungsverhältnis eines Kraftstoffs ist, welcher an der Wandfläche bzw. -oberfläche eines Zylinders anhaftet, wenn die Nacheinspritzung durchgeführt wird;

einen dritten Berechnungsschritt eines Berechnens einer Nacheinspritzmenge, welche tatsächlich einzuspritzen ist, und zwar auf der Basis der erforderlichen Nacheinspritzmenge, welche in dem ersten Berechnungsschritt berechnet wird, und des Verhältnisses bzw. Anteils der Nacheinspritzmenge, welche nicht zu der erzwungenen Regeneration beiträgt, welche in dem zweiten Berechnungsschritt berechnet wird,

wobei die Nacheinspritzung mit der Nacheinspritzmenge durchgeführt wird, welche in dem dritten Berechnungsschritt berechnet wird;

einen Schritt eines Bestimmens, ob eine Voreinspritzung eines Kraftstoffs während eines Kompressionshubs vor einer Haupteinspritzung durchgeführt wird oder nicht, und zwar auf der Basis von wenigstens einem detektierten Resultat betreffend die Temperatur, die Drehzahl und/oder die Last, und wenn die Voreinspritzung durchgeführt wird, wobei die Kraftstoff-Einspritzmittel geregelt bzw. gesteuert werden, um die Voreinspritzung durchzuführen;

einen Schritt eines Korrigierens einer Voreinspritzmenge, um die Voreinspritzmenge auf der Basis des Restgasverhältnisses zu verringern, welche in dem zweiten Berechnungsschritt berechnet wird, und

einen Schritt eines Durchführens der Voreinspritzung mit der Voreinspritzmenge, welche korrigiert wird, um in dem Schritt eines Korrigierens der Voreinspritzmenge verringert zu werden.

4. Verfahren zur Steuerung der Kraftstoffeinspritzung für einen Motor nach Anspruch 3, weiters umfassend einen Schritt eines Einstellens der Anzahl von Voreinspritzungen, weicher die Anzahl von Voreinspritzungen einstellt, wenn die Voreinspritzung durchgeführt wird, und zwar auf der Basis von wenigstens einem detektierten Resultat betreffend die Temperatur, die Drehzahl und/oder die Last,

wobei die Voreinspritzung mit der Anzahl von Einspritzungen durchgeführt wird, welche durch die Mittel zum Einstellen der Anzahl von Voreinspritzungen eingestellt wird.

5. Computerprogramm-Produkt zur Steuerung der Kraftstoffeinspritzung, welches, wenn auf einem geeigneten Computer geladen und abgearbeitet, das Verfahren zur Steuerung der Kraftstoffeinspritzung gemäß einem oder mehreren der vorangehenden Ansprüche 3 oder 4 durchführen kann.

**Revendications**

1. Dispositif de commande d'injection de carburant d'un moteur, qui comprend :

un filtre (27) à particules qui est placé sur le parcours d'échappement du moteur et qui capture les particules d'échappement,
un moyen (26, 28) de détection de quantité accumulée qui détecte la quantité de particules d'échappement accumulées dans le filtre (27) à particules,

un moyen (4) d'injection de carburant qui injecte le carburant directement dans une chambre de combustion située entre les cylindres du moteur et

un moyen (50) de régénération forcée du filtre à particules qui, lorsqu'une quantité accumulée égale ou supérieure à une quantité prédéterminée est détectée par le moyen (26, 28) de détection de quantité accumulée, commande le moyen (4) d'injection de carburant pour effectuer la post-injection qui injecte du carburant pendant la course de détente qui suit l'injection principale qui injecte le carburant au voisinage du point mort haut de compression pour éliminer par combustion les particules d'échappement accumulées dans le filtre (27),

ledit dispositif de commande d'injection de carburant comprenant :

un moyen (23, 25, 29) de détection d'une valeur associée à la température qui détecte une valeur associée à la température du filtre (27),
un moyen (41) de détection de vitesse qui détecte la vitesse du moteur,
un moyen (45) de détection de charge qui détecte la charge du moteur,
un premier moyen (50) de calcul qui calcule la quantité de post-injection nécessaire pour la régénération forcée du filtre (27) sur base d'au moins un résultat détecté par les moyens (23, 25, 29, 41, 45) de détection,

**caractérisé par**
un deuxième moyen (50) de calcul qui calcule un rapport de la quantité de post-injection lorsque la post-injection est effectuée sur base d'au moins un résultat détecté par les moyens (23, 25, 29, 41, 45) de détection, ledit rapport de quantité de post-injection ne contribuant pas à la régénération forcée du filtre (27) à particules et étant un rapport de gaz résiduel qui reste dans la chambre de combustion située entre les cylindres lorsque la post-injection est effectuée et un rapport d'adhérence de surface de paroi d'un carburant qui adhère sur la surface de paroi d'un cylindre lorsque la post-injection est effectuée,
un troisième moyen (50) de calcul qui calcule la quantité de post-injection à injecter effectivement sur base de la quantité nécessaire de post-injection calculée par le premier moyen (50) de calcul et le rapport de la quantité de post-injection qui ne contribue pas à la régénération forcée calculé par le deuxième moyen (50) de calcul,
le moyen (50) de régénération forcée étant structuré de manière à effectuer la post-injection avec la quantité de post-injection calculée par le troisième moyen (50) de calcul,
un moyen (50) pour effectuer la pré-injection qui détermine si oui ou non la pré-injection qui injecte du carburant pendant la course de compression avant l'injection principale est effectuée sur base d'au moins un résultat détecté par les moyens (23, 25, 29) de détection de valeur associée à la température, par le moyen (41) de détection de vitesse et par le moyen (45) de détection de charge et qui, si la pré-injection est effectuée, commande le moyen d'injection de carburant pour la pré-injection et
un moyen (50) de correction de quantité de pré-injection qui corrige la quantité de pré-injection pour la diminuer sur base du rapport de gaz résiduel calculé par le deuxième moyen (50) de calcul,
le moyen (50) qui effectue la pré-injection étant structuré de manière à effectuer la pré-injection avec la quantité de pré-injection corrigée pour être diminuée par le moyen (50) de correction de quantité de pré-injection.

2. Dispositif de commande d'injection de carburant d'un moteur selon la revendication 1, qui comprend en outre un moyen (50) pour régler le nombre de pré-injections, qui règle le nombre de pré-injections lorsque la pré-injection est effectuée sur base d'au moins un résultat détecté par les moyens (23, 25, 29) de détection d'une valeur associée à la température, par le moyen (41) de détection de vitesse et par le moyen (45) de détection de charge,
le moyen (50) qui effectue la pré-injection étant structuré de manière à effectuer la pré-injection avec le nombre d'injections réglé par le moyen pour régler le nombre de pré-injections.

3. Procédé de commande d'injection de carburant d'un moteur, qui comprend les étapes qui suivent :

détecter la quantité de particules d'échappement accumulées dans le filtre (27) à particules qui est placé sur le parcours d'échappement du moteur et qui capture les particules d'échappement,
lorsqu'une quantité accumulée égale ou supérieure à une quantité prédéterminée est détectée, effectuer la post-injection qui injecte du carburant pendant la course de détente qui suit l'injection principale qui injecte le carburant au voisinage du point mort haut de compression pour éliminer par combustion les particules d'échappement accumulées dans le filtre (27),
détecter une valeur associée à la température du filtre (27), la vitesse du moteur et/ou la charge du moteur,
une première étape de calcul qui consiste à calculer la quantité de post-injection nécessaire pour la régénération forcée du filtre (27) sur base d'au moins un résultat détecté dans l'étape de détection,

**caractérisé par**

une deuxième étape de calcul qui consiste à calculer le rapport de la quantité de post-injection qui ne contribue pas à la régénération forcée du filtre (27) à particules lorsque la post-injection est effectuée sur base d'au moins un résultat détecté dans l'étape de détection,

le rapport de la quantité de post-injection qui ne contribue pas à la régénération forcée du filtre (27) à particules calculé dans la deuxième étape de calcul étant le rapport d'un gaz résiduel qui reste dans la chambre de combustion située entre les cylindres lorsque la post-injection est effectuée et le rapport d'adhérence de surface de paroi d'un carburant qui adhère à la surface de paroi d'un cylindre lorsque la post-injection est effectuée,

une troisième étape de calcul qui consiste à calculer la quantité de post-injection à injecter effectivement sur base de la quantité nécessaire de post-injection calculée dans la première étape de calcul et le rapport de la quantité de post-injection qui ne contribue pas à la régénération forcée calculé dans la deuxième étape de calcul,

la post-injection étant effectuée avec la quantité de post-injection calculée dans la troisième étape de calcul,

une étape qui consiste à déterminer si oui ou non la pré-injection qui injecte du carburant pendant la course de compression qui précède l'injection principale est effectuée sur base d'au moins un résultat détecté associé la température, à la vitesse et/ou à la charge et, si la pré-injection est effectuée, le moyen d'injection de carburant étant commandé pour effectuer la pré-injection,

une étape qui consiste à corriger la quantité de pré-injection pour diminuer la quantité de pré-injection sur base du rapport de gaz résiduel calculé dans la deuxième étape de calcul et

une étape qui consiste à effectuer la pré-injection avec la quantité de pré-injection corrigée pour être diminuée dans l'étape de correction de quantité de pré-injection.

4. Procédé de commande d'injection de carburant d'un moteur selon la revendication 3, qui comprend en outre une étape qui consiste à régler le nombre de pré-injections lorsque la pré-injection est effectuée sur base d'au moins un résultat détecté associé à la température, à la vitesse et/ou à la charge,

la pré-injection étant effectuée avec le nombre d'injections réglé par le moyen de réglage du nombre de pré-injections.

5. Produit de programme informatique de commande d'injection de carburant qui, lorsqu'il est chargé et exécuté sur un ordinateur approprié, permet de mettre en oeuvre le procédé de commande d'injection de carburant selon une ou plusieurs des revendications 3 ou 4 qui précèdent.

# FIG. 1

CONTROL UNIT

# FIG. 2

PRE-INJECTION IS NOT PERFORMED

PRE-INJECTION PERFORMING AREA:
ONE-STAGE INJECTION

PRE-INJECTION PERFORMING AREA:
TWO-STAGE INJECTION

PRE-INJECTION
PERFORMING AREA:
THREE-STAGE INJECTION

LOAD ⟶ LARGE

ENGINE SPEED ⟶ LARGE

EXHAUST TEMPERATURE ⟶ HIGH

# FIG. 3A

COMPRESSION

-60                    O

# FIG. 3B

COMPRESSION

-60                    O

# FIG. 3C

COMPRESSION

-60                    O

# FIG. 4

POST-INJECTION IS NOT PERFORMED

POST-INJECTION PERFORMING AREA

POST-INJECTION
IS NOT PERFORMED

LOAD ⟶ LARGE

ENGINE SPEED ⟶ LARGE

EXHAUST TEMPERATURE ⟶ HIGH

# FIG. 5A

# FIG. 5B

# FIG. 6

```
                    ┌─────────┐
                    │  START  │
                    └─────────┘
                         │
                         ▼
┌──────────────────────────────────────────────────────┐
│ DETECT ACCUMULATED AMOUNT OF EXHAUST PARTICULATES      │ ~ S1
└──────────────────────────────────────────────────────┘
                         │
                         ▼
           NO        ◇ S2
      ◄──────────  ACCUMULATED AMOUNT > α ? ◇
      │                  │
      │                 YES
      │                  ▼
      │   ┌──────────────────────────────────────────────┐
      │   │ FORCED REGENERATION PERFORMING FLAG = 1        │ ~ S3
      │   └──────────────────────────────────────────────┘
      │                  │
      │                  ▼
      │   ┌──────────────────────────────────────────────┐
      │   │ CALCULATE POST-INJECTION AMOUNT A REQUIRED FOR │ ~ S4
      │   │ FORCED REGENERATION                            │
      │   └──────────────────────────────────────────────┘
      │                  │
      │                  ▼
      │   ┌──────────────────────────────────────────────┐
      │   │ CALCULATE POST-INJECTION TIMING                │ ~ S5
      │   └──────────────────────────────────────────────┘
      │                  │
      │                  ▼
      │   ┌──────────────────────────────────────────────┐
      │   │ CALCULATE INTER-CYLINDER RESIDUAL GAS RATIO B  │ ~ S6
      │   └──────────────────────────────────────────────┘
      │                  │
      │                  ▼
      │   ┌──────────────────────────────────────────────┐
      │   │ CALCULATE CYLINDER WALL SURFACE ADHERING RATIO C│ ~ S7
      │   └──────────────────────────────────────────────┘
      │                  │
      │                  ▼
      │   ┌──────────────────────────────────────────────┐
      │   │ CALCULATE POST-INJECTION AMOUNT D TO BE INJECTED│ ~ S8
      │   └──────────────────────────────────────────────┘
      │                  │
      │                  ▼
      │   ┌──────────────────────────────────────────────┐
      │   │ PERFORM FORCED REGENERATION                    │ ~ S9
      │   │ (PERFORM POST-INJECTION)                       │
      │   └──────────────────────────────────────────────┘
      │                  │
      └──────────────────┤
                         ▼
                    ┌─────────┐
                    │   END   │
                    └─────────┘
```

# FIG. 7

START

CALCULATE PRE-INJECTION AMOUNT E — S11

S12

NO ⟵ FORCED REGENERATION PERFORMING FLAG = 1

YES

CALCULATE DECREASED PRE-INJECTION AMOUNT VALUE F — S13

CALCULATE PRE-INJECTION AMOUNT G TO BE INJECTED — S14

PERFORM PRE-INJECTION (E OR G) — S15

END

## FIG. 8

LARGE

LOAD

SMALL

MEDIUM

POST-INJECTION AMOUNT A REQUIRED FOR
FORCED REGENERATION: LARGE

MEDIUM

SMALL

ENGINE SPEED ⟶ LARGE

EXHAUST TEMPERATURE ⟶ HIGH

# FIG. 9

POST-INJECTION TIMING: RETARD

MEDIUM

ADVANCE

ENGINE SPEED ⟶ LARGE

EXHAUST TEMPERATURE ⟶ HIGH

# FIG. 10

LOAD → LARGE

LARGE

MEDIUM

INTER-CYLINDER
RESIDUAL GAS RATIO B: SMALL

LARGE

ENGINE SPEED ⟶ LARGE

EXHAUST TEMPERATURE ⟶ HIGH

# FIG. 11

POST-INJECTION TIMING ⟶ LATE

CYLINDER WALL SURFACE
ADHERING RATIO C:
LARGE

MEDIUM

SMALL

REQUIRED POST-INJECTION AMOUNT A ⟶ LARGE